# EUROPEAN PATENT SPECIFICATION

(11) **EP 2 296 428 B1**
(45) Date of publication and mention of the grant of the patent: **22.08.2012**
(21) Application number: 10176174.0
(22) Date of filing: 10.09.2010
(51) Int. Cl.: H04W 88/10, H04W 92/04

(54) **Multimode base station and method for sharing a transmission link by modules of different standards in a multimode base station**
Multimodus-Basisstation und Verfahren zur gemeinsamen Nutzung einer Übertragungsverbindung durch Module unterschiedlichen Standards in einer Multimodus-Basisstation
Station de base multimodale et procédé de partage d'une liaison de transmission par des modules des standards différents dans une station de base multimodale

(30) Priority: 10.09.2009 CN 200910195655
(43) Date of publication of application: 16.03.2011
(73) Proprietor: Huawei Technologies Co., Ltd., Longgang District, Shenzhen Guangdong 518129 (CN)
(72) Inventor: Yu, Weidong, Shenzhen Guangdong 518129 (CN); Luo, Jing, Shenzhen Guangdong 518129 (CN)
(74) Representative: Isarpatent

(56) References cited:
- EP-A1- 2 086 245
- EP-A1- 2 088 795
- US-A1- 2008 227 441

## Description

### Field of the Invention

The present invention relates to a communications technology, and in particular, to a multimode base station and a method for sharing a transmission link by the multimode base station.

### Background of the Invention

With the progress of communications technologies, a multimode base station emerges. The multimode or multi-standard base station can concurrently support multiple wireless standards. For example, the base station that can concurrently support the global system for mobile communications (GSM) and the universal mobile telecommunications system (UMTS) is called a global universal (GU) dual-mode base station.

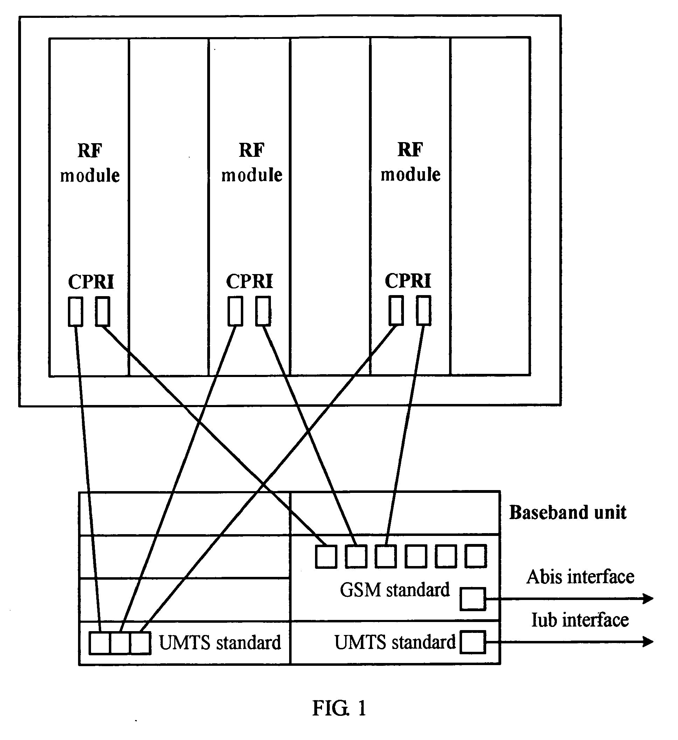

The multimode base station in the prior art is formed by adding boards of different standards. FIG. 1 shows a structure of the GU dual-mode base station. The module of the GSM standard establishes a connection with the radio frequency (RF) module through a common public radio interface (CPRI), and establishes a connection between the base station and an external entity through the Abis interface. The module of the UMTS standard establishes a connection with the RF module through the CPRI, and establishes a connection between the base station and an external entity through the Iub interface. The services of the two standards on the GU base station run independently. The preceding external entity may be a device or network outside the base station. Specifically, the external entity may be a transmission network, a router, or a controller.

The prior art has the following problems: Services of various standards on the multimode base station are processed by modules of various standards separately; each module of the multimode base station has an interface with an external entity. Because multiple interfaces correspond to multiple different physical links, the physical links and transmission bandwidth cannot be shared.

Document D1(US 2008-227441 A1) discloses a base station for processing a plurality of communications channels for up to a plurality of network operators comprises a transceiver module communicatively coupled to up to a plurality of network operators ,the transceiver module configured to process a plurality of upstream communication channels and a plurality of downstream communication channels based on one or more wireless communication modulation protocols, each of the upstream and downstream communication channels associated with one of the network operators.

Document D2(EP 2086245A1) discloses a multimode base station includes: at least two protocol processing modules, vested in at least two modes respectively, and adapted to process data of the mode according to the protocol corresponding to the mode; and an interface processing module, adapted to distinguish the mode of the date while receiving the data, and distribute the data to the protocol processing module corresponding to the mode.

Document D3(EP 2088795A1) discloses a multimode base station are coupled to each other through a uniform interface unit that provides a basal physical transmission bearer and a uniform transmission protocol stack, namely uniform logic interface, for transmitting a higher layer application protocol to support information interaction between multimode base stations even base station sub-nodes in each multimode base station.

### Summary of the Invention

Embodiments of the present invention provide a multimode base station and a method for sharing a transmission link by the multimode base station.

To solve the above technical problem, the method for sharing a transmission link by a multimode base station may be implemented according to independent Claim 1 by the following technical solution:
A first-standard module receives data sent to a multimode base station; if the data is associated with the module of the first standard, the first-standard module processes the data; and if the data is associated with a second-standard module, the first-standard module sends, through interfaces of the first-standard module and the second-standard module, the data to the second-standard module for processing.
wherein the interfaces of the first-standard module and the second-standard module include any one of the following: a Fast Ethernet ,FE, electrical interface on the panel, an FE optical interface on the panel, and a small form-factor pluggable-fast Ethernet, SFP-FE, interface.

The above problem is further solved by a multimode base station according to independent claim 4, which includes a first-standard module and a second-standard module, where:
the first-standard module and the second-standard module each include a first communication interface, and the first-standard module includes a second communication interface through which the first-standard module connects with an external entity outside the multimode;
wherein the first communication interface includes any one of the following: a Fast Ethernet ,FE, electrical interface on the panel, an FE optical interface on the panel, and a small form-factor pluggable-fast Ethernet, SFP-FE, interface; the first-standard module is configured to: receive, through the second communication interface of the first-standard module, data sent to the multimode base station; if the data is associated with the second-standard module, send, through the first communication interfaces of the first-standard module and the second-standard module, the data to the second-standard module; and
the second-standard module is configured to: receive the data sent from the first-standard module, and process the received data.

In embodiments of the present invention, data is received through an interface of the multimode base station through which the multimode base station connects with an external entity; the data is distributed to a module of a standard which the data is associated with. In this way, the multimode base station needs one external interface to share the physical link and transmission bandwidth.

### Brief Description of the Drawings

To make the technical solution in the present invention or in the prior art clearer, the accompanying drawings for illustrating the embodiments of the present invention or the prior art are provided below. Apparently, the accompanying drawings are exemplary only, and those skilled in the art can derive other drawings from such accompanying drawings without creative efforts.
FIG. 1 shows a structure of a dual-mode base station in the prior art;
FIG. 2 is a flowchart of a method in Embodiment 1 of the present invention;
FIG. 3 is a flowchart of a method according to an example of the present invention;
FIG. 4 shows a structure of a multimode base station in Embodiment 2 of the present invention;
FIG. 5a is a block diagram of a multimode base station in Embodiment 2 of the present invention;
FIG. 5b is another block diagram of a multimode base station in Embodiment 2 of the present invention;
FIG. 6 shows a structure of a multimode base station according to a further example of the present invention;
FIG. 7a shows a structure of another multimode base station according to the further example of the present invention;
FIG. 7b shows a structure of another multimode base station according to the further example of the present invention;
FIG. 8 shows a structure of a baseband module in an Embodiment 9 of the present invention;
FIG. 9 shows a structure of another baseband module in Embodiment 3 of the present invention; and
FIG. 10 shows a structure of a multimode base station in Embodiment 9 of the present invention.

### Detailed Description of the Embodiments

The technical solution under the present invention is described below with reference to the accompanying drawings. Apparently, the embodiments described below are exemplary only, without covering all embodiments of the present invention. Persons having ordinary skill in the art can derive other embodiments from the embodiments given herein without any creative effort, and all such embodiments are covered in the scope of the present invention.

In embodiments and examples of the present invention, the multimode base station may support multiple different standards, for example, the combination of at least two standards of the following: GSM, UMTS, code division multiple access (CDMA), worldwide interoperability for microwave access (WiMAX), and long term evolution (LTE). The multimode base stations are such as: a dual-mode base station formed by the GSM and the UMTS, a dual-mode base station formed by the UMTS and the CDMA, a dual-mode base station formed by the UMTS and the LTE, and a tri-mode base station formed by the GSM, the UMTS, and the LTE. For better description and commonality, embodiments of the present invention are described based on the multimode base station formed by the GSM and the UMTS. It is understandable that embodiments of the present invention are not limited to the GSM and the UMTS standards. It should be noted that the preceding multimode base station may be a multimode macro base station or a distributed multimode base station.

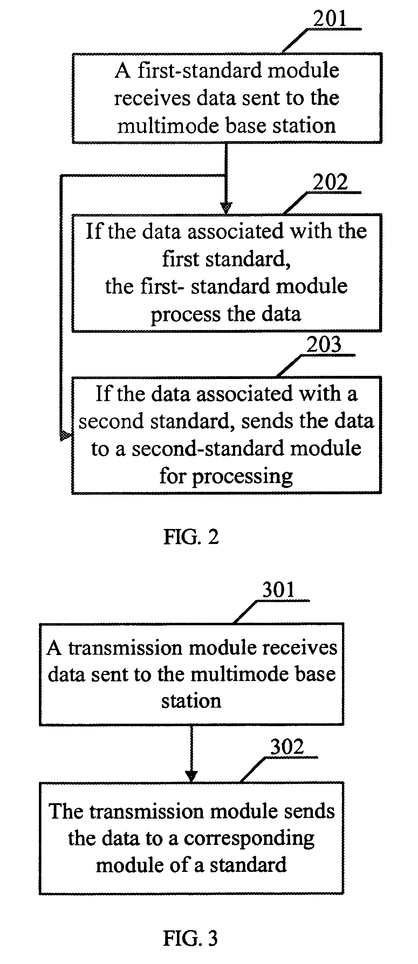

Embodiment 1: As shown in FIG. 2, a method for sharing a transmission link by a multimode base station in Embodiment 1 of the present invention includes the following steps:
Step 201: A module of a first standard (hereafter referred to as first-standard module) receives data sent to the multimode base station.
Step 202: If the data is associated with the module of the first standard, the first-standard module processes the data. If the data is associated with a module of a second standard (hereafter referred to as second-standard module), the process goes to step 203.
Step 203: The first-standard module sends, through interfaces of the first-standard module and the second-standard module, the data to the second-standard module for processing.

Optionally, the first standard is the GSM and the second standard is the UMTS, or the first standard is the UMTS and the second standard is the GSM.

After step 201, the process may further include: The first-standard module judges which module of a standard the data is associated with, that is, determining the module of the standard with which the data received by the multimode base station is associated. The association between the data received by the multimode base station and a module may be an association between a data type and the module of the standard, or an association between a destination address of the data and the module of the standard. Subsequent embodiments and examples are based on the association between the destination address of the data and the module of the standard. It is understandable that the specific method for associating the data with the standard module does not affect the implementation of embodiments of the present invention.

Specifically, the interfaces of the first-standard module and the second-standard module include any one of the following: a Fast Ethernet (FE) electrical interface on the panel, an FE optical interface on the panel, and a small form-factor pluggable-fast Ethernet (SFP-FE) interface. The preceding standards and interfaces are only examples. Thus, embodiments of the present invention are not limited to the preceding standards and interfaces.

In the preceding embodiment, the steps may be executed by a module of a standard (i.e. the first-standard module), of the multimode base station. The first-standard module has an interface for external communication, and receives data through the interface from an external entity. Then, the first-standard module distributes the data to a module for processing, where the data is associated with the module. In this way, the multimode base station needs one external interface for external communication, thus the physical link and transmission bandwidth are shared by modules of various standards.

The preceding embodiment describes a solution in the first data transmission direction (that is, the multimode base station receives data sent from an external entity). In the second data transmission direction (that is, the multimode base station sends data to an external entity), the solution may further include:
The first-standard module receives, through the interfaces of the first-standard module and the second-standard module, data sent from the second-standard module, where the data from the second-standard module needs to be sent out of the multimode base station.
The first-standard module sends the data out of the multimode base station.

In the preceding embodiment, the steps may be executed by a module of a standard (i.e. the first-standard module), of the multimode base station. In the first direction, the first-standard module receives data through an interface which is used to connect the multimode base station with an external entity (i.e. the external interface), and then distributes the data to a module of the standard for processing, where the data is associated with the module of the standard. In this way, the multimode base station needs one external interface to share the physical link and transmission bandwidth. In the second direction, a module with an external interface (that connects with an external entity outside the base station) sends the data of the multimode base station through the external interface. In this way, the multimode base station needs one external interface to share the physical link and transmission bandwidth.

Example : Another method for sharing a transmission link by a multimode base station is provided in the example of the present invention. This method is different from the method provided in Embodiment 1 of the present invention in that: In the example, the interface through which the multimode base station connects with an external entity (i.e. the external interface) may be set in a transmission module, for example, the external interface may be configured on a transmission board, and modules of various standards in the multimode base station are connected to the transmission board. As shown in FIG. 3, the method includes the following steps:
Step 301: The transmission module receives data sent to the multimode base station.
Step 302: The transmission module sends the data to a corresponding module of a standard. Specifically, if the data is associated with a module of a first-standard (hereafter referred to as first-standard module), the data is sent, through the interfaces of the first-standard module and the transmission module, to the first-standard module for processing; if the data is associated with a module of a second standard (hereafter referred to as second-standard module), the data is sent, through the interfaces of the second-standard module and the transmission module, to the second-standard module for processing.

After step 301, the process further includes: the transmission module judges which module of a standard the data is associated with, that is, determining the module of the standard with which the data received by the multimode base station is associated. The association between the data received by the multimode base station and a module may be an association between a data type and the module of the standard, or an association between the destination address of the data and the module of the standard. It is understandable that the specific method for associating the data with the module of the standard does not affect the implementation of the example of the present invention.

The preceding steps may be executed by the transmission module set in the multimode base station. The transmission module receives data through an interface through which the multimode base station connects with an external entity, and then distributes the data to a module of a standard for processing, where the data is associated with the module of the standard. In this way, the multimode base station needs one external interface to share the physical link and transmission bandwidth.

The preceding example describes a solution in the first data transmission direction. In the second data transmission direction, the solution may further include:
The transmission module receives, through the interfaces of the first-standard module and the transmission module, data that the first-standard module that needs to be sent out of the multimode base station, and forward the data out of the multimode base station; and/or
The transmission module receives, through the interfaces of the second-standard module and the transmission module, data that the second-standard module that needs to be sent out of the multimode base station, and forward the data out of the multimode base station.

For better description, the first-standard and the second-standard represent two different standards. The standards may be the GSM, the UMTS, the CDMA, the WiMAX, or the LTE. The specific standards are not limited in this example.

The preceding steps may be executed by the transmission module set in the multimode base station. Modules of various standards send data that needs to be sent out of the multimode base station to the transmission module that has an external interface; the transmission board that has an external interface sends the data out of the base station. In this way, the multimode base station needs one external interface to share the physical link and transmission bandwidth.

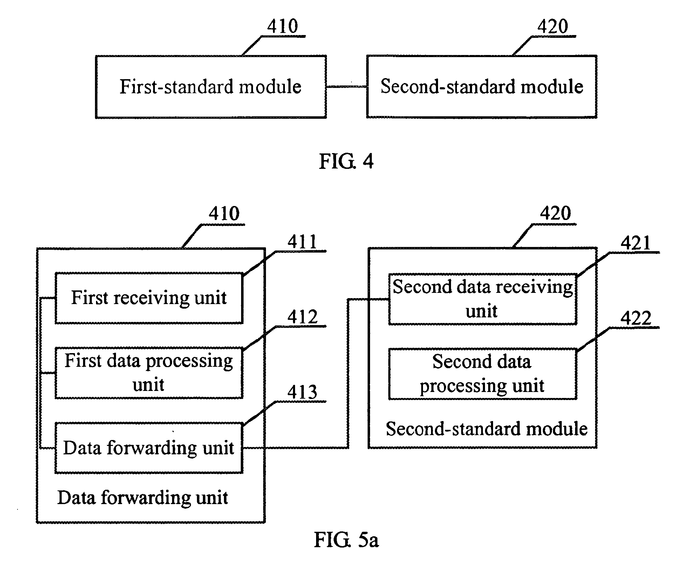

Embodiment 2: As shown in FIG. 4, a multimode base station provided in this embodiment includes:
at least two standard modules, including a first-standard module 410 and a second-standard module 420.

The first-standard module 410 and the second-standard module 420 each includes a first communication interface, and the first-standard module 410 includes a second communication interface through which the first-standard module 410 connects withan external entity outside the multimode base station, that is, first-standard module 410 includes an external interface for external communication. Through the first communication interfaces of the first-standard module 410 and the second-standard module 420, the data between the first-standard module 410 and the second-standard module 420 may be transmitted. Through the second communication interface of the first-standard module 410, the data between the first-standard module 410 and the external entity outside the multimode base station may be transmitted, where the second communication interface is used to connect first-standard module 410 with the external entity outside the multimode base station,.

Specifically, the first-standard module 410 is configured to: receive, through the second communication interface, data sent to the multimode base station; if the data is associated with the second-standard module 420, send the data to the second-standard module 420 through the first communication interfaces of the first-standard module 410 and the second-standard module 420. The second-standard module 420 is configured to: receive the data sent from the first-standard module 410, and process the received data.

The first-standard module 410 is further configured to: receive data from the second-standard module 420 through the first interface, and send, through the second communication interface, the data received from the second-standard module 420 out of the multimode base station.

The first-standard module 410 is further configured to process the data associated with the first-standard module 410 when the data that is sent to the multimode base station is associated with the first-standard module 410, wherein the data is received through the second communication interface.

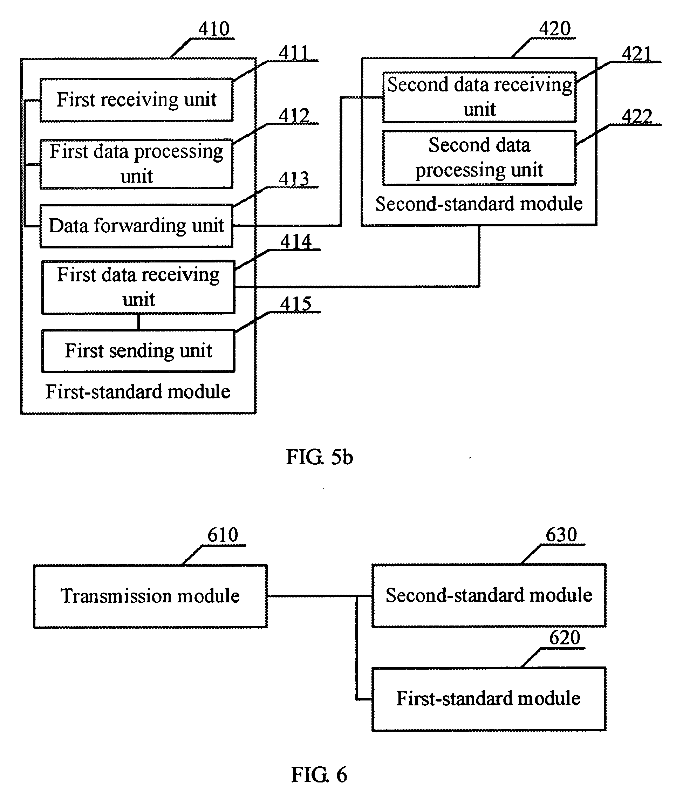

Optionally, as shown in FIG. 5, the first-standard module 410 includes:
a first receiving unit 411, configured to receive data sent to the multimode base station;
a first data processing unit 412, configured to process the data if the data is associated with the first-standard module 410; and
a data forwarding unit 413, configured to send the data to the second-standard module 420 if the data is associated with the second-standard module 420.

Optionally, the second-standard module 420 includes:
a second data receiving unit 421, configured to receive data sent from the first-standard module 410; and
a second data processing unit 422, configured to process the data sent from the first-standard module 410.

Optionally, the preceding first data processing unit 412 is configured to process the data if the destination address of the data is associated with the first-standard module.

The data forwarding unit 413 is configured to send the data to the second-standard module if the destination address of the data is associated with the second-standard module.

Further, as shown in FIG. 5b, the preceding multimode base station may transmit the data received from different standard modules in the uplink direction.

The first-standard module 410 may further include: a first data receiving unit 414, configured to receive data that the second-standard module 420 sends out of the multimode base station; and
a first sending unit 415, configured to send the data sent from the second-standard module 420 out of the multimode base station.

Further example: As shown in FIG. 6, another multimode base station provided in the example includes:
a transmission module 610 and at least two modules of different standards, where the at least two modules include a first-standard module and a second-standard module.

The transmission module 610 includes communication interfaces that connect with the first-standard module 620 and the second-standard module 630 separately, and includes a communication interface that connects with the external entity outside the multimode base station. The transmission module 610 includes an interface that connects with the first-standard module 620 to send the data between the transmission module 610 and the first-standard module 620. In addition, the transmission module 610 includes an interface that connects with the second-standard module 630 to send the data between the transmission module 610 and the second-standard module 630. The transmission module 610 includes an interface that connects with the external entity outside the multimode base station to send data between the transmission module 610 and the external entity.

Specifically, the transmission module 610 is configured to send the received data through the interface connected with the first-standard module 620 to the first-standard module 620 if the data received from the external entity outside the multimode base station is associated with the first-standard module 620.

The transmission module 610 may be further configured to: receive, through the interface connected with the first-standard module 620, data sent from the first-standard module 620, and send, through the interface connected with the external entity outside the multimode base station, the data received from the first-standard module 620, out of the transmission module 610, and/or

the transmission module 610 may be further configured to: receive, through the interface connected with the second-standard module 630, data sent from the second-standard module 630, and send, through the interface connected with the external entity outside the multimode base station, the data received from the second-standard module 630 , out of the transmission module 610,.

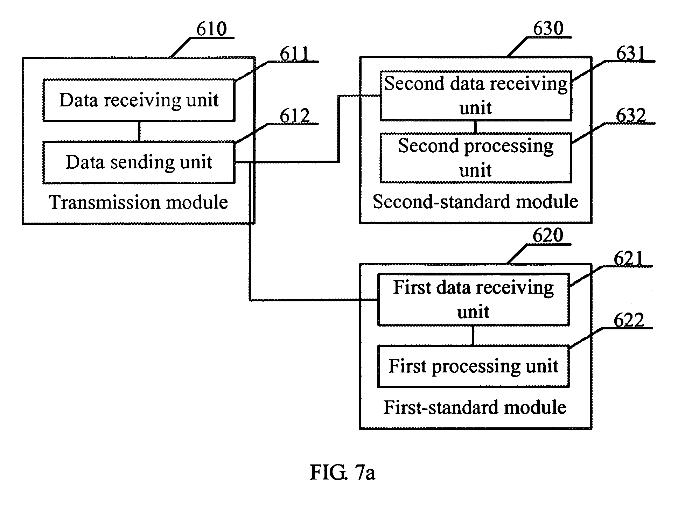

Specifically, as shown in FIG. 7a, the transmission module 610 includes:
a data receiving unit 611, configured to receive data sent to the multimode base station; and
a data sending unit 612, configured to send the preceding data to a corresponding standard module. Specifically, the data sending unit 612 may be configured to: if the data is associated with the first-standard module 620, send the data to the first-standard module 620; and if the data is associated with the second-standard module 630, send the data to the second-standard module 630.

Specifically, the first-standard module 620 includes:
a first data receiving unit 621, configured to receive data sent from the transmission module 610; and
a first processing unit 622, configured to process the data sent from the transmission module 610.

The second-standard module 630 includes:
a second data receiving unit 631, configured to receive data sent from the transmission module 610; and
a second processing unit 632, configured to process the data sent from the transmission module 610.

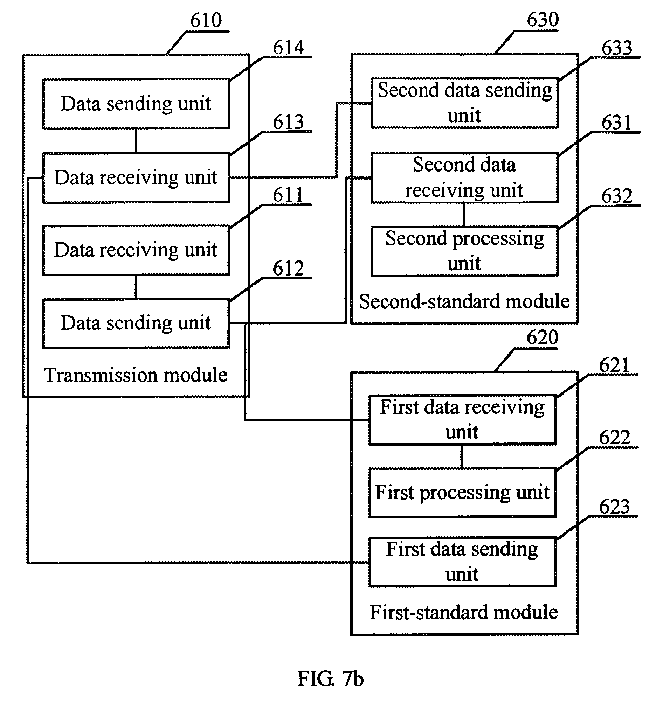

Further, as shown in FIG. 7b, the preceding multimode base station may transmit, in the uplink direction, the data received from different standard modules.

The preceding first-standard module 620 further includes: a first data sending unit 623, configured to send the data that is sent out of the multimode base station to the transmission module 610.

The preceding second-standard module 630 further includes: a second data sending unit 633, configured to send the data that is sent out of the multimode base station to the transmission module 610.

The transmission module 610 further includes:
a data receiving unit 613, configured to receive data sent from the first-standard module 620 and/or the second-standard module 630; and
a data sending unit 614, configured to send the data sent from the preceding first-standard module 620 and/or the second-standard module 630 out of the multimode base station.

Embodiment 3: This embodiment is based on the multimode base station that includes the GSM standard module and the UMTS standard module. It is understandable that embodiments of the present invention are not limited to the GSM and the UMTS standards.

The following describes the connection method of the modules that form the multimode base station.

The following describes the connection method of a module of a standard with an external interface (for example, the UMTS).

Various modules that form the multimode base station are connected in the multimode base station connects through a Fast Ethernet (FE) interface on a panel. If the GSM standard and the UMTS standard support the Internet Protocol (IP) transmission, the GSM and the UMTS boards of the GU dual-mode base station are interconnected through the FE interface on the panel. The data transmissions of the GSM standard and the UMTS standard may be configured independently, and are similar to the cascaded transmissions of the GSM base station and the UMTS base station.

In this embodiment, a module of a standard (for example, the module of the UMTS standard ) of the dual-mode base station includes the unified external interface (the interface of the dual-mode base station is used to connect with an external entity outside the dual-mode base station) of the dual-mode base station and is connected to the controller outside the multimode base station through the FE line or the Gigabit Ethernet (GE) line over IP. The transmission modes that connect with the controller may be diversified, for example, FE electrical interface transmission, GE optical interface transmission, or distributed transmission based on the quality of service (QoS) of different services. Two standard modules of the dual-mode base station are interconnected through the FE interfaces on panels. The standard (for example, the UMTS) connected to the controller routes and forwards the data from the controller to another standard. The preceding external interface is used to connect the multimode base station with an external device. The specific device is not limited in this embodiment of the present invention.

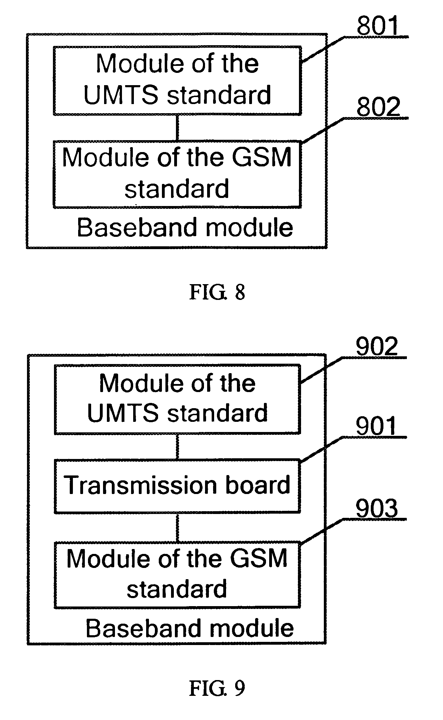

As shown in FIG. 8, the baseband module includes a module of the UMTS standard 801 and a module of the GSM standard 802. The two modules of the standards, of the dual-mode base station may be interconnected through the FE interfaces on the panels according to the following solutions:
Solution 1: Modules of different standards, of the dual-mode base station are interconnected through the FE electrical interface on the panel.
   In this solution, one module of a standard (for example, the module of the UMTS standard 801), of the dual-mode base station is connected to the controller of the base station and interconnected with a module of another standard (for example, the module of the GSM standard 802) through the FE electrical interfaces on the panels to implement shared IP transmission. The interconnection cable of FE electrical interface on the panel may be an RJ45 network cable.
Solution 2: Modules of different standards, of the dual-mode base station are interconnected through the FE optical interfaces on the panels.
   In this solution, one module of a standard (for example, the module of the UMTS standard 801), of the dual-mode base station is connected to the controller of the base station and interconnected with a module of another standard (for example, the module of the GSM standard 802) through the FE optical interfaces on the panela to implement shared IP transmission. The FE interconnection cable on the panel may be a single mode fiber or a multimode fiber. In Solutions 1 and 2, two modules of different standards use FE interfaces and are interconnected through the FE interfaces on the panels.
Solution 3: Two modules of standards, of the dual-mode base station are interconnected through the SFP-FE (Small Form-Factor Pluggable-Fast Ethernet, SFP- FE) interface transfer module.

One module of a standard (for example, the module of the UMTS standard 801), of the dual-mode base station is connected to the controller of the base station and interconnected with a module of another standard (for example, the module of the GSM standard 802) through the FE interfaces on the panels. On the interconnection interface, the SFP-FE interface transfer module may be used to implement shared IP transmission. The SFP-FE port transfer module is configured to convert the SFP interface into the FE interface. The FE interconnection cable on the panel may be an RJ45 network cable. In Solution 3, one standard may use the FE interface, and the other standard may use the SFP interface; the two modules of different standards are interconnected through the SFP-FE transfer module.

The following describes an implementation mode in which the transmission board has an external interface.

FIG. 9 shows a structure of another baseband module in which the transmission board 901 is used to implement the shared transmission on the FE panel. The connection mode is similar to the implementation mode in which a module of a standard, of the multimode base station has an external interface. The transmission board 901 provides an FE interface interconnected with the panel, where the FE interface is connected to the module of the UMTS standard module 902 and the module of the GSM standard module 903. The interface connected to the controller 904 outside the multimode base station may be configured on the transmission board 901 or other boards, which does not affect the implementation of embodiments of the present invention.

The following describes the data flow in the preceding connection mode:
The controller of a base station may configure routes from its IP address to different standard modules of the dual-mode base station. On the dual-mode base station, different standard modules configure routes from their IP addresses to the controller of the base station. Then, the module of the standard with the external interface of the dual-mode base station configures a route for forwarding the data of a module of another standard.

In the preceding solutions, although the connection methods are different, the working processes are similar. That is, one standard module with an external interface routes and forwards the data of another standard to the module of another standard. The following describes the data flow, assuming one standard module on the multimode base station has an external interface.
1. The controller sends the data to the dual-mode base station.
   (1) The controller sends data, directed to two or more modules of different standards, to the dual-mode base station according to the standard routes from the controller to the multimode base station.
   (2) The module of a standard with an external interface in the dual-mode base station acquires its own standard data.
   (3) The module of a standard with an external interface in the dual-mode base station forwards the data of another standard to a module of another standard through the interfaces of the two modules according to a routing table.
   (4) The module of another standard on the dual-mode base station acquires its own data.
2. The dual-mode base station sends the data to the controller.
   (1) The module of another standard on the dual-mode base station sends data to the standard with an external interface through the interconnection interface.
   (2) The modules of the standard with an external interface on the dual-mode base station may send the data of its own standard through the interface connected to the controller, and forwards the data of another standard to the controller according to the route of the data sent by the other standard.
   (3) The controller acquires the received standard data.

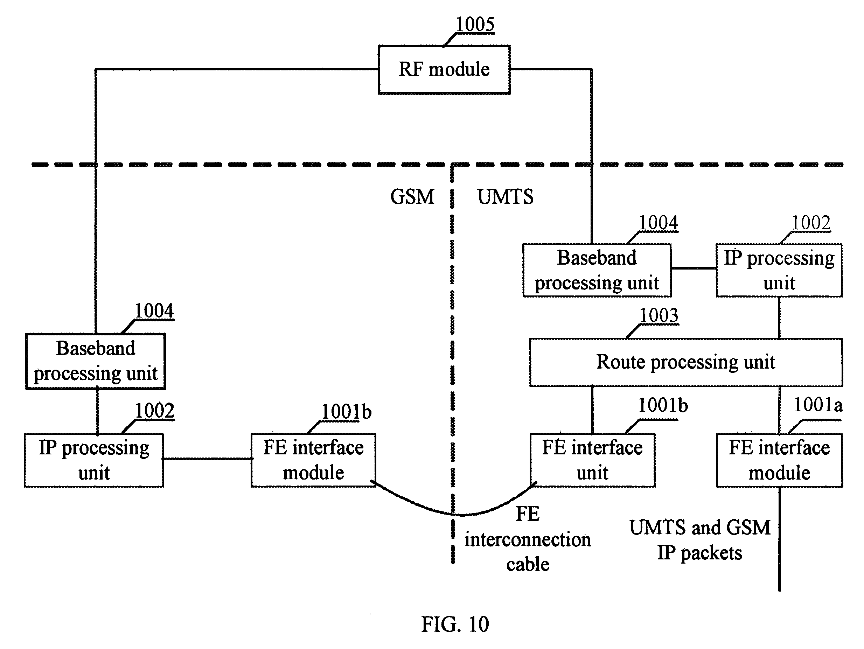

The following describes the data flow inside the dual-mode base station, as shown in FIG. 10.

The IP data whose destination addresses are the UMTS module and the GSM module are received by the FE interface module 1001a of the UMTS module, the FE interface module 1001a connects the UMTS module and the controller.

The data is configured by the FE interface module 1001a and then sent to the route processing unit 1003.

The route processing unit 1003 provides link layer protocol processing functions. Specifically, the route processing unit 1003 sends the UMTS data to an IP processing unit 1002, and then the IP processing unit 1002 sends the processed service data to the RF module 1005 through a baseband processing unit 1004. The route processing unit 1003 may further route the GSM data. Specifically, the route processing unit 1003 sends the GSM data from the UMTS board to the GSM board through the FE interconnection cable between the UMTS board and the GSM board. In this embodiment, the UMTS standard board routes IP packets for the GSM standard board.

The GSM data reaches another IP processing unit 1002 through the GSM-standard FE interface module 1001b, and the GSM data processed by another IP processing unit 1002 is sent to the RF module 1005 through another baseband processing unit 1004.

In addition, the idea of this embodiment of the present invention may also be applied in a scenario in which the multimode base station is formed by more than two standards. For example, the UMTS and the LTE share the board resources (in this case, the UMTS and the LTE are considered as the first standard), and the GSM has independent board resources (the GSM is considered as the second standard). In this way, the GSM, the UMTS, and the LTE form a tri-mode base station inside a base station. The connections between the first standard and the second standard and the data flow on the tri-mode base station are the same as those on the dual-mode base station, and are not further described.

In the preceding implementation mode, in the first direction, the data is received through an interface that is used to connect the multimode base station with an external entity; the data is then distributed to a module of a standard with which the data is associated. In this way, the multimode base station needs one external interface to share the physical link and transmission bandwidth. In the second direction, the standard without an external interface sends the data that needs to be sent out of the multimode base station to a module of a standard with an external interface; the module with an external interface sends the data out of the base station. In this way, the multimode base station needs one external interface to share the physical link and transmission bandwidth.

It is understandable to those skilled in the art that all or part of the steps in the methods provided in the preceding embodiments may be performed by hardware instructed by a program. The program may be stored in a computer readable storage medium, such as a read only memory/random access memory (ROM/RAM), a magnetic disk, and a compact disk-read-only memory (CD-ROM).

Detailed above are a multimode base station and a method for sharing a transmission link by the multimode base station under the present invention. Although the invention is described through some exemplary embodiments, the invention is not limited to such embodiments. It is apparent that those skilled in the art can make various modifications and variations to the invention without departing from the scope of the invention. To conclude, the contents of the specifications should not be construed as limitations to the present invention.

## Claims

1. A method for sharing a transmission link by a multimode base station, wherein the multimode base station comprises a first-standard module (410) and a second-standard module (420), the method **characterized by** comprising:
receiving (201), by the first-standard module (410), data sent to the multimode base station;
if the data is associated with the first-standard module (410), processing (202) the data by the first-standard module (410); and
if the data is associated with the second-standard module (420), sending (203), by the first-standard module (410), through interfaces of the first-standard module (410) and the second standard module (420), the data to the second-standard module (420) for processing;
wherein the interfaces of the first-standard module (410) and the second-standard module (420) include any one of the following: a Fast Ethernet ,FE, electrical interface on a panel, an FE optical interface on a panel, and a small form-factor pluggable-fast Ethernet, SFP-FE, interface.

2. The method of claim 1, wherein an association between the data and a module of a standard comprises an association between a module of a standard and a destination address of the data.

3. The method of claim 1, further comprising:
receiving, by the first-standard module (410),data sent from the second-standard module (420) through the interfaces of the first-standard module (410) and the second-standard module (420), wherein the data sent by the second-standard module (420) needs to be sent out of the multimode base station; and
sending, by the first-standard module (410), the data received from the second-standard module (420) out of the multimode base station.

4. A multimode base station, **characterized by** comprising:
a first-standard module (410) and a second-standard module (420), wherein:
the first-standard module (410) and the second-standard module (420) each comprises a first communication interface, and the first-standard module (410) comprises a second communication interface through which the first-standard module (410) connects with an external entity outside the multimode base station;
wherein the first communication interface includes any one of the following: a Fast Ethernet ,FE, electrical interface on a panel, an FE optical interface on a panel, and a small form-factor pluggable-fast Ethernet, SFP-FE, interface;
wherein the first-standard module (410) is configured to: receive data sent to the multimode base station through the second communication interface; if the data is associated with the second-standard module (420), send, through the first communication interfaces of the first-standard module (410) and the second-standard module (420), the data to the second-standard module (420); and wherein
the second-standard module (420) is configured to: receive the data sent from the first-standard module (410), and process the received data.

5. The multimode base station of claim4, wherein:
the first-standard module (410) is further configured to: receive data from the second-standard module (420) through the first communication interfaces, and send the data received from the second-standard module (420) out of the multimode base station through the second communication interface.

6. The multimode base station of claim 4 or 5, wherein:
the first-standard module (410) is further configured to process the data associated with the first-standard module (410) when the data that is sent to the multimode base station is associated with the first-standard module (410), wherein the data is received through the second communication interface.

7. The multimode base station of claim 4, wherein:
the first-standard module (410) comprises: a first receiving unit (411), configured to receive the data sent to the multimode base station;
a first data processing unit (412), configured to process the packet data if a destination address of the packet data is associated with the first-standard module (410); and
a data forwarding unit (413), configured to send the data to the second-standard module (420) if the data is associated with the second-standard module (420).

## Patentansprüche

1. Verfahren für die gemeinsame Nutzung einer Übertragungsverbindung durch eine Multimodus-Basisstation, wobei die Multimodus-Basisstation ein Modul (410) mit einer ersten Norm und ein Modul (420) mit einer zweiten Norm umfasst, wobei das Verfahren **dadurch gekennzeichnet ist, dass** es Folgendes umfasst:
Empfangen (201) durch das Modul (410) mit der ersten Norm von Daten, die zu der Multimodus-Basisstation gesendet werden;
falls die Daten dem Modul (410) mit der ersten Norm zugeordnet sind, Verarbeiten (202) der Daten durch das Modul (410) mit der ersten Norm; und
falls die Daten dem Modul (420) mit der zweiten Norm zugeordnet sind, Senden (203) der Daten durch das Modul (410) mit der ersten Norm über Schnittstellen des Moduls (410) mit der ersten Norm und des Moduls (420) mit der zweiten Norm zu dem Modul (420) mit der zweiten Norm zur Verarbeitung;
wobei die Schnittstellen des Moduls (410) mit der ersten Norm und des Moduls (420) mit der zweiten Norm eines der Folgenden umfassen: eine elektrische Schnittstelle für schnelles Ethernet, elektrische FE-Schnittstelle, auf einer Konsole, eine optische FE-Schnittstelle auf einer Konsole und eine einsteckbare Schnittstelle für schnelles Ethernet mit kleinem Formfaktor, SFP-FE-Schnittstelle.

2. Verfahren nach Anspruch 1, wobei eine Zuordnung zwischen den Daten und einem Modul einer Norm eine Zuordnung zwischen einem Modul einer Norm und einer Zieladresse der Daten umfasst.

3. Verfahren nach Anspruch 1, das ferner Folgendes umfasst:
Empfangen durch das Modul (410) mit der ersten Norm von Daten, die von dem Modul (420) mit der zweiten Norm über die Schnittstellen des Moduls (410) mit der ersten Norm und des Moduls (420) mit der zweiten Norm gesendet werden, wobei die von dem Modul (420) mit der zweiten Norm gesendeten Daten aus der Multimodus-Basisstation gesendet werden müssen; und
Senden durch das Modul (410) mit der ersten Norm der Daten, die von dem Modul (420) mit der zweiten Norm empfangen werden, aus der Multimodus-Basisstation.

4. Multimodus-Basisstation, **gekennzeichnet dadurch, dass** sie Folgendes umfasst:
ein Modul (410) mit einer ersten Norm und ein Modul (420) mit einer zweiten Norm, wobei:
das Modul (410) mit der ersten Norm und das Modul (420) mit der zweiten Norm jeweils eine erste Kommunikationsschnittstelle umfassen, wobei das Modul (410) mit der ersten Norm eine zweite Kommunikationsschnittstelle umfasst, durch die das Modul (410) mit der ersten Norm mit einer externen Entität außerhalb der Multimodus-Basisstation verbunden ist;
wobei die erste Kommunikationsschnittstelle irgendeines der Folgenden umfasst: eine elektrische Schnittstelle für schnelles Ethernet, elektrische FE-Schnittstelle, auf einer Konsole, eine optische FE-Schnittstelle auf einer Konsole und eine einsteckbare Schnittstelle für schnelles Ethernet mit kleinem Formfaktor, SFP-FE-Schnittstelle;
wobei das Modul (410) mit der ersten Norm konfiguriert ist, Daten, die zu der Multimodus-Basisstation durch die zweite Kommunikationsschnittstelle gesendet werden, zu empfangen; und, falls die Daten dem Modul (420) mit der zweiten Norm zugeordnet sind, die Daten durch die ersten Kommunikationsschnittstellen des Moduls (410) mit der ersten Norm und des Moduls (420) mit der zweiten Norm zu dem Modul (420) mit der zweiten Norm zu senden; und wobei
das Modul (420) mit der zweiten Norm konfiguriert ist, die von dem Modul (410) mit der ersten Norm gesendeten Daten zu empfangen und die empfangenen Daten zu verarbeiten.

5. Multimodus-Basisstation nach Anspruch 4, wobei:
das Modul (410) mit der ersten Norm ferner konfiguriert ist, Daten von dem Modul (420) mit der zweiten Norm durch die ersten Kommunikationsschnittstellen zu empfangen und die von dem Modul (420) mit der zweiten Norm empfangenen Daten aus der Multimodus-Basisstation durch die zweite Kommunikationsschnittstelle zu senden.

6. Multimodus-Basisstation nach Anspruch 4 oder 5, wobei:
das Modul (410) mit der ersten Norm ferner konfiguriert ist, die dem Modul (410) mit der ersten Norm zugeordneten Daten zu verarbeiten, wenn die Daten, die zu der Multimodus-Basisstation gesendet werden, dem Modul (410) mit der ersten Norm zugeordnet sind, wobei die Daten durch die zweite Kommunikationsschnittstelle empfangen werden.

7. Multimodus-Basisstation nach Anspruch 4, wobei:
das Modul (410) mit der ersten Norm Folgendes umfasst: eine erste Empfangseinheit (411), die konfiguriert ist, die zu der Multimodus-Basisstation gesendeten Daten zu empfangen;
eine erste Datenverarbeitungseinheit (412), die konfiguriert ist, die Paketdaten zu verarbeiten, falls eine Zieladresse der Paketdaten dem Modul (410) mit der ersten Norm zugeordnet ist; und
eine Datenweiterleitungseinheit (413), die konfiguriert ist, die Daten zu dem Modul (420) mit der zweiten Norm zu senden, falls die Daten dem Modul (420) mit der zweiten Norm zugeordnet sind.

## Revendications

1. Procédé de partage d'une liaison de transmission par une station de base multimode, la station de base multimode comprenant un module de première norme (410) et un module de seconde norme (420), le procédé étant **caractérisé en ce qu'**il comprend :
la réception (201), par le module de première norme (410), de données envoyées à la station de base multimode ;
si les données sont associées au module de première norme (410), le traitement (202) des données par le module de première norme (410) ; et
si les données sont associées au module de seconde norme (420), l'envoi (203), par le module de première norme (410), par le biais d'interfaces du module de première norme (410) et du module de seconde norme (420), des données au module de seconde norme (420) en vue de leur traitement ;
dans lequel les interfaces du module de première norme (410) et du module de seconde norme (420) comportent l'une quelconque des interfaces suivantes : interface électrique Fast Ethernet, FE, sur panneau, interface optique FE sur panneau, et interface Fast Ethernet enfichable à petit facteur de forme, SFP-FE.

2. Procédé selon la revendication 1, dans lequel une association entre les données et un module d'une norme comprend une association entre un module d'une norme et une adresse destinataire des données.

3. Procédé selon la revendication 1, comprenant en outre :
la réception, par le module de première norme (410), de données envoyées depuis le module de seconde norme (420) par le biais des interfaces du module de première norme (410) et du module de seconde norme (420), les données envoyées par le module de seconde norme (420) devant être envoyées à partir de la station de base multimode ; et
l'envoi, par le module de première norme (410), des données reçues depuis le module de seconde norme (420) à partir de la station de base multimode.

4. Station de base multimode, **caractérisée en ce qu'**elle comprend :
un module de première norme (410) et un module de seconde norme (420), dans laquelle :
le module de première norme (410) et le module de seconde norme (420) comprennent chacun une première interface de communication, et le module de première norme (410) comprend une seconde interface de communication par le biais de laquelle le module de première norme (410) se connecte à une entité externe en dehors de la station de base multimode ;
dans laquelle la première interface de communication comporte l'une quelconque des interfaces suivantes : interface électrique Fast Ethernet, FE, sur panneau, interface optique FE sur panneau, et interface Fast Ethernet enfichable à petit facteur de forme, SFP-FE ;
dans laquelle le module de première norme (410) est configuré pour : recevoir des données envoyées à la station de base multimode par le biais de la seconde interface de communication ; si les données sont associées au module de seconde norme (420), envoyer, par le biais des premières interfaces de communication du module de première norme (410) et du module de seconde norme (420), les données au module de seconde norme (420) ; et dans laquelle
le module de seconde norme (420) est configuré pour : recevoir les données envoyées depuis le module de première norme (410) et traiter les données reçues.

5. Station de base multimode selon la revendication 4, dans laquelle :
le module de première norme (410) est configuré en outre pour : recevoir des données depuis le module de seconde norme (420) par le biais des premières interfaces de communication, et envoyer les données reçues depuis le module de seconde norme (420) à partir de la station de base multimode par le biais de la seconde interface de communication.

6. Station de base multimode selon la revendication 4 ou 5, dans laquelle :
le module de première norme (410) est configuré en outre pour : traiter les données associées au module de première norme (410) quand les données envoyées à la station de base multimode sont associées au module de première norme (410), les données étant reçues par le biais de la seconde interface de communication.

7. Station de base multimode selon la revendication 4, dans laquelle :
le module de première norme (410) comprend : une première unité de réception (411), configurée pour recevoir les données envoyées à la station de base multimode ;
une première unité de traitement de données (412), configurée pour traiter les données de paquets si une adresse destinataire des données de paquets est associée au module de première norme (410) ; et
une unité d'acheminement de données (413), configurée pour envoyer les données au module de seconde norme (420) si les données sont associées au module de seconde norme (420).
